# FASCICULE DE BREVET EUROPEEN

(11) **EP 1 749 188 B1**
(45) Date de publication et mention de la délivrance du brevet: **13.02.2013**
(21) Numéro de dépôt: 05773270.3
(22) Date de dépôt: 23.05.2005
(51) Int. Cl.: G01B 11/25, G01B 11/16

(54) **DISPOSITIF DE MESURE DE DEFORMATIONS DE SURFACE**
VORRICHTUG ZUR MESSUNG VON OBERFLÄCHENDEFORMATIONEN
DEVICE FOR MEASURING SURFACE DEFORMATIONS

(30) Priorité: 25.05.2004 FR 0405633
(43) Date de publication de la demande: 07.02.2007
(73) Titulaire: Insidix, 38180 Seyssins (FR)
(72) Inventeur: LECOMTE, Jean-Claude, F-38250 Saint Nizier du Moucherotte (FR); FAYOLLE, Romain, F-38000 Grenoble (FR)
(74) Mandataire: Hecké, Gérard
(86) Numéro de dépôt international: PCT/FR2005/001274
(87) Numéro de publication internationale: WO 2005/119171

(56) Documents cités:
- EP-A- 0 740 139
- WO-A-2004/015368
- US-B1- 6 564 166
- YANG ET AL: "Precision measurement and nondestructive testing by means of digital phase shifting speckle pattern and speckle pattern shearing interferometry" MEASUREMENT, INSTITUTE OF MEASUREMENT AND CONTROL. LONDON, GB, vol. 16, no. 3, novembre 1995 (1995-11), pages 149-160, XP004040393 ISSN: 0263-2241
- BASTAWROS A F ET AL: "TRANSIENT THERMAL STRAIN MEASUREMENTS IN ELECTRONIC PACKAGES" IEEE TRANSACTIONS ON COMPONENTS,HYBRIDS,AND MANUFACTURING TECHNOLOGY, IEEE INC. NEW YORK, US, vol. 13, no. 4, 1 décembre 1990 (1990-12-01), pages 961-966, XP000176841 ISSN: 0148-6411
- COBURN D ET AL: "DIGITAL CORRELATION SYSTEM FOR NONDESTRUCTIVE TESTING OF THERMALLY STRESSED CERAMICS" APPLIED OPTICS, OPTICAL SOCIETY OF AMERICA,WASHINGTON, US, vol. 34, no. 26, 10 septembre 1995 (1995-09-10), pages 5977-5986, XP000523023 ISSN: 0003-6935

## Description

### Domaine technique de l'invention

L'invention concerne un dispositif de mesure de topographies et de déformations d'au moins une surface d'un échantillon, comportant
- des premiers moyens de mesure, pour la mesure de topographies et de déplacements qui sont perpendiculaires à un plan prédéterminé,
- des seconds moyens de mesure, pour la mesure des déformations qui sont dans un plan défini par la surface, par corrélation d'images, les premiers et second moyens de mesure utilisant au moins une caméra commune de détection de lumière,
- des moyens de chauffage et des moyens de mesure de la température de l'échantillon.

### État de la technique

Les matériaux et les assemblages, électroniques et microélectroniques par exemple, se déforment habituellement sous l'effet de phénomènes thermomécaniques lors de leur fabrication, lors de l'assemblage sur carte électronique et lors de leur fonctionnement. Ces déformations symptomatiques de contraintes internes peuvent donner lieu à des défauts, par exemple des défauts d'interface, des gauchissements de surfaces ou des ouvertures de circuits électriques au niveau des interconnexions entre différents composants d'un assemblage microélectronique et/ou électronique.

Il est alors nécessaire de caractériser ces déformations non seulement à température ambiante mais également à différentes températures en régime transitoire ou stationnaire. En effet, les déformations qui préfigurent un état de contrainte des matériaux et du composant et de son assemblage par exemple, et ce à différentes températures, sont utiles d'être connues pour: le développement de nouveaux matériaux, composants et procédés de réalisation, l'évaluation des contraintes consécutives aux changements de phase, l'aide à la simulation thermomécanique, l'évaluation de la fiabilité, l'analyse de comportement et de fonctionnement, l'analyse de défaillance, etc...

Les profils de température imposés aux produits dans les procédés industriels sont effectués typiquement lors de l'assemblage du composant (brasage, collage, moulage de la résine d'encapsulation, etc...) par défilement dans différentes chambres isothermes, et la vitesse de passage dans les chambres détermine ainsi le taux de variation de la température vue par l'échantillon. Les procédés de fabrication des composants, comme le principe du déplacement de l'échantillon lors de l'assemblage, rendent cependant difficile une mesure précise de ces déformations. D'autre part, les dispositifs statiques à vocation de mesure ne permettent habituellement pas d'excéder des vitesses de variation de température de 1°C/s.

Le document US6097477 décrit une méthode de mesure des déformations d'une surface d'objet selon une direction perpendiculaire à la surface et selon les deux directions orthogonales dans le plan de la surface. La méthode utilise trois faisceaux laser et trois caméras et les déformations sont déterminées par l'intermédiaire de corrélations d'images enregistrées par les caméras.

Le document W003093760 décrit un système de mesure des déformations d'un assemblage microélectronique dans un plan de mesure par corrélation d'images avec mise en évidence de motifs propres à la surface par effet speckle. Le système comporte une chambre environnementale pour effectuer, par exemple, des cycles thermiques et, ainsi, mesurer les déformations en fonction de la température. La longueur caractéristique d'un motif de surface est liée à la rugosité de la surface.

Les documents W09855826 et W09725590 décrivent des techniques de mesure de déformations selon une direction perpendiculaire à un plan d'une surface en fonction de la température, utilisant une illumination structurée et une mesure de figures d'interférence géométrique de type Moiré. Cependant, ces techniques créent une incertitude lorsque la déformation crée un décalage supérieur à la longueur caractéristique de l'illumination structurée. Les amplitudes, la résolution et le champ de vue dépendent de la longueur caractéristique fixée par le pas d'un motif périodique.

Le document W02004/015368 décrit un appareil de mesure destiné à la détermination de déformations et de dimensions de composants microélectroniques. Une première source de lumière permet d'effectuer une analyse de type corrélation d'images. Une seconde source de lumière permet d'effectuer une analyse de type Moiré perpendiculairement au plan de l'échantillon. Un support d'échantillon comporte un dispositif pour solliciter l'échantillon, par exemple par puissance électrique ou par déformation mécanique. Le support d'échantillon comporte un thermomètre.

Le document EP0740139 décrit un dispositif de mesures in-situ de tensions mécaniques de couches. Le dispositif comporte un boîtier extérieur, par exemple en quartz, dans lequel est disposé un boîtier intérieur en métal. Les deux boîtiers sont reliés par l'intermédiaire de moyens de support ayant des conductivités électriques et thermique faibles et un coefficient de dilatation thermique faible. Le boîtier intérieur est refroidi, par exemple par un fluide comme l'hélium. La température peut être réglée par asservissement.

Le document US6,564,166 montre un dispositif de mesure de déformations d'une surface d'une échantillon, comportant deux moyens de mesure et une caméra commune de détection de lumière. Les premiers moyens de mesure comportent des moyens de projection d'images composites avec un motif périodique. Il y a aussi une enceinte transparente dans laquelle est disposée l'échantillon et un émetteur infrarouge pour chauffage.

Les différents moyens de chauffage utilisés ne permettent pas d'obtenir une bonne homogénéité de la température dans l'échantillon.

Aucune de ces techniques ne permet de mesurer la topographie et les déformations dans le plan de la surface et selon un axe perpendiculaire au plan observé, de façon absolue et relative. En particulier, la technique Moiré ne permet pas d'effectuer des mesures avec des champs de vision de dimensions variables. En effet, il est difficile de passer d'un champ de mesure de 1cm² à un champ de vision de 30x30cm², avec un même dispositif de type Moiré.

De plus, les différentes pièces assemblées destinées à être caractérisées, par exemple des assemblages microélectroniques et électroniques, présentent généralement des différences de niveaux entre les surfaces qui sont de l'ordre millimétrique, tandis que les amplitudes de déformation qui doivent être mesurées vont de 1*µ*m à quelques centaines de microns et cela à différentes températures en régime stationnaire ou transitoire. Ces amplitudes de déformation sont représentatives des conditions de fabrication, d'assemblage ou de fonctionnement des composants électroniques, par exemple. De nombreuses applications nécessitent de bénéficier d'un rapport profondeur de champ sur résolution très important (de l'ordre de 1500 par exemple), ce qu'aucune des techniques précitées ne permet.

### Objet de l'invention

L'invention a pour but de remédier à ces inconvénients et, en particulier, de proposer une combinaison de moyens optiques de mesure de la topographie et des déformations absolues et relatives dans le plan et selon un axe perpendiculaire à ce plan (pour les différentes pièces assemblées). Ces moyens optiques de mesure sont associés à un moyen de sollicitation thermique qui permet une sollicitation représentative des gradients thermiques rencontrés lors de la fabrication, l'assemblage ou le fonctionnement des composants et des cartes électroniques par exemple, tant en régime stationnaire que transitoire, sans perturber les mesures par des variations thermiques ou mécaniques du moyen de chauffage. L'invention a également pour but d'intégrer au sein d'un même dispositif, un moyen permettant d'effectuer des mesures avec des étendues variables du champ de mesure, par exemple comprises entre 1cm² et 30x30cm², pour des différences de niveaux entre les surfaces qui sont de l'ordre millimétrique, tandis que les amplitudes de déformation qui doivent être mesurées vont de moins d'un 1*µ*m à quelques centaines de microns.

Selon l'invention, ce but est atteint par les revendications annexées et, plus particulièrement, par le fait que
- les premiers moyens de mesure comportent des moyens de projection d'images composites, par illumination de la surface avec une séquence d'images, chaque image comportant un motif périodique, les motifs périodiques des différentes images de la séquence d'images présentant respectivement des pas de périodicité différents,
- le dispositif comporte une enceinte transparente au moins localement, à la lumière visible, dans laquelle l'échantillon est disposable, les moyens de chauffage comportant au moins un émetteur infrarouge créant une lumière infrarouge non-détectée par la caméra.

L'invention a également pour but un procédé d'utilisation d'un dispositif selon l'invention, comportant
- l'attribution à chaque élément de volume d'un code de référence représentatif de niveaux de gris détectés par la caméra lors d'une première projection de la séquence d'images,
- et la corrélation desdits codes de référence avec des données acquises par la caméra lors de projections ultérieures de la séquence d'images sur la surface de l'échantillon, de manière à obtenir les coordonnées de ladite surface.

L'invention est définie dans les revendications 1 et 15.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 est une représentation schématique d'un mode de réalisation particulier d'un dispositif de mesure de déformations selon l'invention.
La figure 2 représente un mode de réalisation particulier d'une lampe d'infrarouge d'un dispositif selon l'invention.
La figure 3 illustre un mode de réalisation particulier d'un procédé d'utilisation d'un dispositif selon l'invention, comportant une alternance de phases d'activation.
La figure 4 illustre un mode de réalisation particulier d'un procédé d'utilisation d'un dispositif selon l'invention, comportant le dépôt de grains micrométriques.
La figure 5 illustre un mode de réalisation particulier de motifs périodiques.

### Description de modes particuliers de réalisation

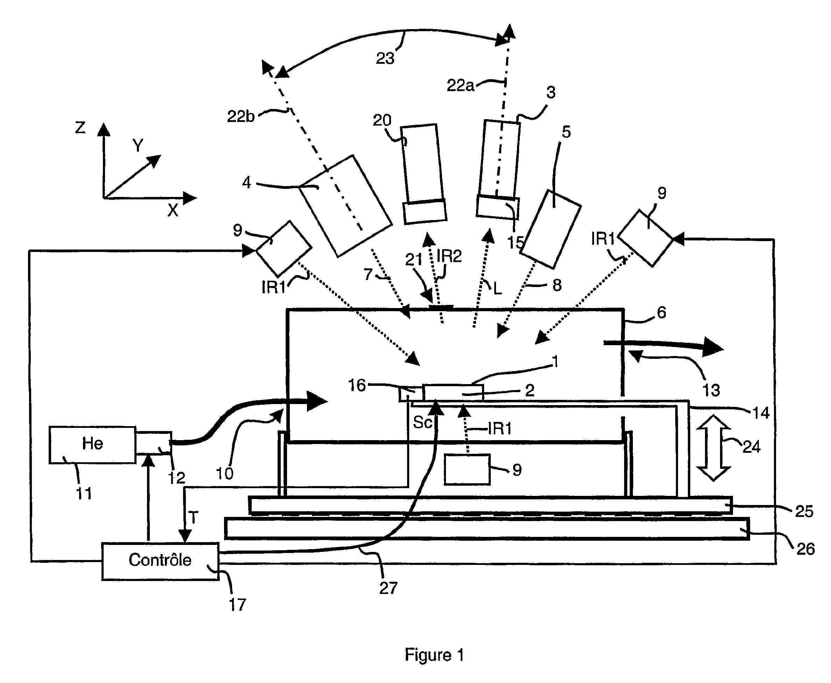

La figure 1 représente un dispositif de mesure de déformations d'une surface 1, par exemple plane, d'un échantillon 2 en fonction de la température. Le dispositif comporte une caméra 3 de détection de lumière visible et une première source de lumière 4 pour l'illumination structurée de l'échantillon 2 avec une lumière structurée pour mesurer des déplacements ou des déformations qui sont perpendiculaires au plan de la surface 1 de l'échantillon 2.

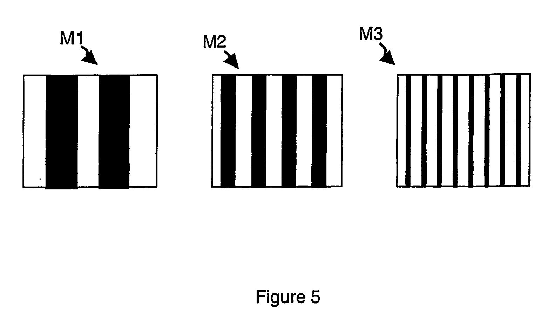

La technique utilisée pour l'illumination structurée comporte la projection d'images composites. Cette technique est effectuée par illumination de la surface 1 avec une séquence d'images. Comme représenté à la figure 5, chaque image comporte un motif périodique M (M1, M2, M3) et les motifs périodiques des différentes images de la séquence d'images présentent respectivement des pas de périodicité différents. Une telle technique permet notamment de déterminer le relief de manière absolue, contrairement aux techniques de type Moiré qui sont sensibles uniquement aux différences de relief et, de plus, uniquement aux différences inférieures à une certaine hauteur.

Sur la figure 1, un axe Z représente la direction perpendiculaire au plan de la surface 1. La première source de lumière 4 est, par exemple, constituée par un projecteur de lumière blanche du type LCD (« Liquid Crystal Display ») ou du type DMD (« Digital Micromirror Device ») ou un projecteur laser. Le dispositif comporte une seconde source de lumière 5 pour l'illumination de l'échantillon 2 par une lumière homogène, blanche ou colorée, cohérente ou non, pour mesurer, de manière connue, des déformations qui sont dans le plan XY de la surface 1 de l'échantillon 2 par corrélation d'images. La seconde source de lumière 5 est, par exemple, constituée par des diodes électroluminescentes. La caméra 3 est également utilisée pour la mesure par corrélation d'images.

La technique de mesure de déformations par corrélation d'images est basée sur des inhomogénéités optiques d'une surface, c'est-à-dire des variations des propriétés de réflexion et d'absorption dans le plan de la surface, aboutissant, par exemple, à des variations des niveaux de gris d'une image enregistrée. Lors d'une déformation de la surface 1, dans le plan de la surface, les inhomogénéités se déplacent également et la caméra 3 enregistre une image différente de l'image enregistrée avant la déformation. La comparaison des deux images entre elles ou avec une image de référence permet de déterminer les déformations dans le plan de la surface. Ainsi, le traitement associé à la méthode de corrélation d'images tient compte des différences de deux images de la surface 1 enregistrées dans les mêmes conditions d'illumination, respectivement à deux instants différents et dans des conditions différentes de sollicitation de l'échantillon.

Dans le mode de réalisation particulier représenté à la figure 1, l'échantillon 2 est disposé dans une enceinte 6 transparente aux lumières visible et infrarouge, permettant la transmission de faisceaux de lumière 7 et 8 issus respectivement des sources de lumière 4 et 5 et permettant la transmission de la lumière L émise par l'échantillon 2 et détectée par la caméra 3, qui est disposée à l'extérieur de l'enceinte 6. L'enceinte 6 est, par exemple, en quartz de silice, pauvre en impuretés comme, par exemple, des groupements d'hydroxyde OH, afin de minimiser l'absorption de rayonnement infrarouge court et moyen. A l'extérieur de l'enceinte 6 transparente est disposé au moins un émetteur infrarouge qui est, de préférence, orientable pour pouvoir le diriger sur l'échantillon 2.

Le ou les émetteurs infrarouges créent une lumière infrarouge dans une bande spectrale largement non-détectée par la caméra 3 et peuvent également être disposés à l'intérieur de l'enceinte. Dans ce cas, l'enceinte (6) peut être opaque à l'infrarouge. L'enceinte (6) doit, cependant, être transparente, au moins localement, à la lumière visible (L). La combinaison du chauffage par infrarouge et de l'enceinte 6 transparente permet notamment de chauffer l'échantillon sans perturber la caméra 3 et d'obtenir une très bonne homogénéité de la température dans l'échantillon. Ainsi, une mesure en dynamique, c'est-à-dire simultanément avec les changements de température, peut être effectuée avec une haute précision.

Sur la figure 1, les émetteurs infrarouges sont constitués par deux lampes 9 émettant un rayonnement infrarouge IR1 et disposées, à l'extérieur de l'enceinte 6 transparente, de part et d'autres de l'enceinte 6, permettant de chauffer l'échantillon 2 par radiation. Dans un mode de réalisation préférentiel, le dispositif comporte huit lampes à infrarouge, disposées de façon symétrique par rapport au centre de l'échantillon, permettant de chauffer l'échantillon de manière uniforme, sans créer de gradients thermiques dus à une illumination par infrarouge asymétrique. L'enceinte 6 étant transparente à la lumière infrarouge, le rayonnement émis par les lampes 9 d'infrarouge est transmis par l'enceinte 6 à l'échantillon 2. La surface de l'enceinte 6 présente, de préférence, une planéité importante et une rugosité faible, facilitant la transmission du rayonnement infrarouge IR et des faisceaux de lumière 7 et 8.

Sur la figure 1, l'enceinte 6 comporte une entrée 10 de fluide de refroidissement, par exemple de l'hélium, relié à un réservoir 11 par l'intermédiaire d'une vanne 12. L'enceinte 6 comporte, de plus, une sortie 13 permettant d'évacuer le fluide de refroidissement de l'enceinte. Le refroidissement peut également être effectué par projection d'azote ou d'un mélange comportant de l'azote humidifié, voire de l'air humide, et également par l'intermédiaire d'effets thermoélectriques.

Sur la figure 1, l'échantillon 2 est disposé sur un support 14 d'échantillon, découplé mécaniquement de l'enceinte 6, c'est-à-dire le support 14 n'est pas en contact direct avec l'enceinte 6. Ainsi, d'éventuelles déformations et déplacements de l'enceinte 6 ne sont pas transmises à l'échantillon 2. Le support 14 a, de préférence, une faible inertie thermique afin de permettre le contrôle et l'évolution rapide de la température de l'échantillon. Le support 14 est, de préférence, transparent au rayonnement infrarouge IR et, par exemple, en quartz de silice. Le support 14 peut, par exemple, être fixé sur une première plaque en marbre 25 portée par un coussin d'air au-dessus d'une seconde plaque en marbre 26, comme représenté à la figure 1.

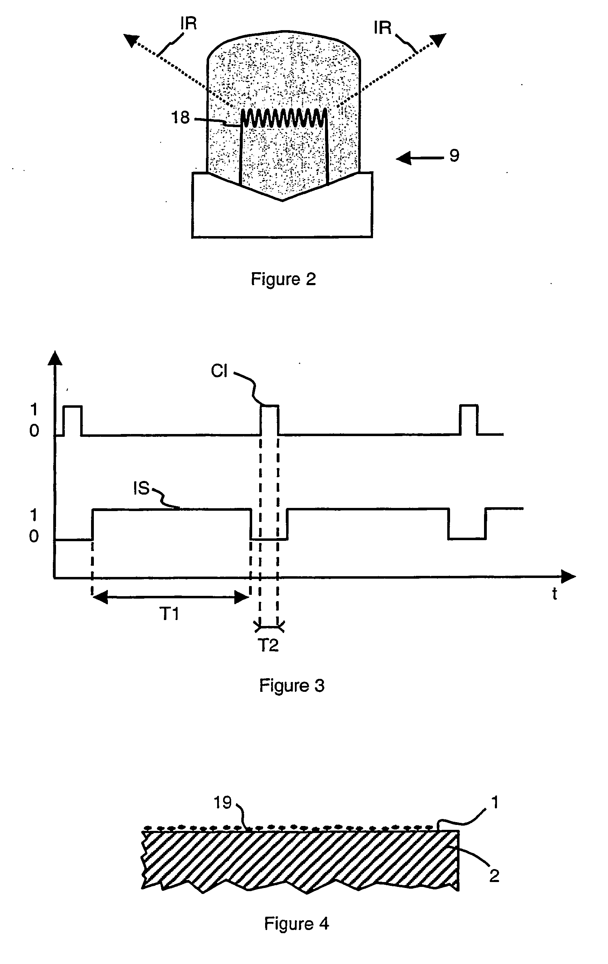

La caméra 3 et les lampes 9 à infrarouge peuvent être adaptées, de manière à ce que le spectre des lampes 9 ne coïncide pas avec le spectre détecté pas la caméra 3. La caméra 3 comporte, de préférence, un filtre 15 de lumières rouge et infrarouge, afin d'éviter des perturbations de la détection de lumière dues au rayonnement infrarouge IR1 émis par les lampes 9 à infrarouge. Les lampes 9 d'infrarouge comportent, de préférence, un filament 18 en tresse de carbone, comme représenté à la figure 2, créant une lumière infrarouge IR1 d'une longueur d'onde moyenne d'environ 2 micromètres. Ainsi, l'émetteur infrarouge crée une lumière infrarouge dans une bande spectrale largement non-détectée par la caméra.

Le dispositif selon l'invention permet de mesurer des formes et des déformations des surfaces visibles d'un échantillon, par exemple un assemblage microélectronique, qui peut être constitué de plusieurs pièces. Les surfaces peuvent être disposées à différentes hauteurs et sous différents angles par rapport au dispositif et sont sensiblement planes, au moins localement.

La mesure est effectuée sous différentes conditions ou changements de conditions correspondant à des grandeurs physiques de sollicitation extérieure de l'échantillon comme, par exemple, la température, la pression, l'humidité, un champ magnétique, une onde électromagnétique (micro-onde), une sollicitation mécanique, etc... Ces sollicitations peuvent provoquer différents processus physiques comme, par exemple, la dissipation thermique ou des changements d'état, par exemple, la polymérisation de matériaux. Le dispositif de mesure permet de caractériser ces processus physiques, comme décrit ci-dessous. Les différentes sollicitations peuvent être générées par tout moyens de manière connue.

Toutes les sollicitations précitées de l'échantillon peuvent être effectuées périodiquement, par exemple par l'intermédiaire du dispositif de contrôle 17. Ainsi, le fonctionnement du circuit électronique constituant l'échantillon 2 peut être interrompu et repris de manière périodique, lors des mesures optiques.

Lorsque l'échantillon est un composant électronique, le procédé peut comporter la mise en fonctionnement dudit composant électronique. Ainsi, la mesure par l'intermédiaire des premiers, seconds et/ou troisièmes moyens de mesure peut être effectuée lors du fonctionnement du composant électronique, qui constitue une façon particulière de solliciter l'échantillon. Le dispositif peut, par exemple, comporter une connexion électrique 27 entre le dispositif de contrôle 17 et l'échantillon 2, transmettant des signaux de contrôle Sc et permettant de faire fonctionner le circuit électronique constituant l'échantillon 2.

Le dispositif comporte des capteurs ou des détecteurs pour la mesure des grandeurs physiques de sollicitation de l'échantillon, par exemple la pression, la température, l'humidité, le champ magnétique, le champ électrique, la dissipation thermique, le changement de phase, la polymérisation, etc... La grandeur physique de sollicitation de l'échantillon peut être contrôlée de manière passive (par exemple la température peut être contrôlée par un dispositif d'isolement) ou de manière active par l'intermédiaire d'un dispositif correspondant de génération d'une sollicitation de l'échantillon (par exemple par une source de chaleur), tout en permettant au dispositif d'effectuer les mesures de topographies et de déformations simultanément à la sollicitation de l'échantillon, et cela en régime permanent ou transitoire. Par exemple, un champ magnétique peut être appliqué par l'intermédiaire d'une bobine ou une pression atmosphérique contrôlée peut être créée dans l'enceinte 6. Un dispositif de contrôle permet, de préférence, d'asservir cette génération de sollicitation à la grandeur physique mesurée ou détectée correspondante. Dans un mode de réalisation préférentiel, le dispositif comporte un élément de mesure de la température et le dispositif de génération de sollicitation est constitué par des éléments de chauffage et de refroidissement, permettant de contrôler la température.

Dans le mode de réalisation représenté à la figure 1, le dispositif comporte un thermomètre 16, disposé sur l'échantillon 2 pour mesurer la température T de celui-ci. Plusieurs thermomètres peuvent être disposés à plusieurs emplacements distincts. Des signaux représentatifs de la température T, ou des températures, sont transmis à un dispositif de contrôle 17 par asservissement des moyens de chauffage et de refroidissement à la température T. Dans le mode de réalisation représenté à la figure 1, les lampes 9 d'infrarouge et la vanne 12 d'hélium sont contrôlées par le dispositif de contrôle 17, de manière à établir et/ou maintenir une température T prédéterminée ou de faire varier la température T à un taux de variation prédéterminé.

Le dispositif selon l'invention permet de faire varier la température à un taux jusqu'à ±3°C/s et, ainsi, de mesurer les déformations en fonction de la température T de manière continue, c'est-à-dire sans être obligé d'attendre l'établissement de l'équilibre thermique après chaque changement de température.

Dans un mode de réalisation particulier, les mesures par illumination structurée et par corrélation d'images sont effectuées en alternance. La figure 3 illustre l'activation alternative des mesures par illumination structurée (IS) et par corrélation d'images (CI) en fonction du temps t. Les premiers moyens de mesure par illumination structurée sont activés pendant une première phase d'une durée T1 (la courbe IS prend alors la valeur 1 à la figure 3). Ensuite, les seconds moyens de mesure par corrélation d'images sont activés pendant une seconde phase d'une durée T2 (la courbe CI prend alors la valeur 1 à la figure 3). La durée T1 est, par exemple, comprise entre 4s et 5s, tandis que la durée T2 peut être de l'ordre de 200ms. La mesure par illumination structurée comporte typiquement la projection d'une série d'images en niveaux de gris ou colorées, par exemple vingt images, par l'intermédiaire de la première source de lumière 4. La mesure par corrélation d'images comporte l'illumination de l'échantillon par l'intermédiaire de la seconde source de lumière 5. Le fonctionnement de la caméra 3 de détection est synchronisé avec les première (4) et seconde (5) sources de lumière respectivement pendant les première et seconde durées. Ainsi, la caméra 3 de détection permet d'acquérir, en alternance, des images respectivement exploitées pour les première et seconde mesures. La caméra peut créer des images de résolution différentes et les paramètres d'acquisition peuvent être différents pour les première et seconde mesures.

Dans le cas où l'alternance des mesures a une période suffisamment faible, par exemple de l'ordre de 5s ou moins, et le taux de variation est suffisamment élevé, par exemple de l'ordre de ±3°C/s, les déformations d'échantillons microélectroniques peuvent être mesurées en situation transitoire et de manière dynamique, c'est-à-dire avant que l'échantillon n'atteigne l'équilibre thermique.

Les techniques de mesure de déformations ou de topographie par lumière structurée sont appliquées classiquement à des surfaces rugueuses ayant un aspect homogène, c'est-à-dire ayant des propriétés de réflexion, d'absorption et de diffusion de la lumière homogènes. La technique de mesure de déformations par corrélation d'images est basée sur des inhomogénéités d'une surface, c'est-à-dire des variations des propriétés de réflexion, d'absorption et de diffusion dans le plan de la surface. Afin d'optimiser l'application simultanée des deux techniques, un procédé d'utilisation du dispositif selon l'invention comporte le dépôt de grains 19 micrométriques sur la surface 1 de l'échantillon 2, comme représenté à la figure 4, par exemple sous forme d'une poudre ou d'une peinture, comportant, par exemple du CaCO₃ ou de la craie. Les grains 19 sont déposés de manière à ce que les grains 19 soient liés à la surface 1, pour qu'ils suivent les déformations de la surface. Par exemple les grains peuvent être déposés sous forme d'aérosols. Le dépôt de grains est, de préférence, réversible, c'est-à-dire les grains peuvent être éliminés après la mesure des déformations. Ainsi, la surface 1 de l'échantillon 2 est rendue inhomogène à l'échelle micrométrique, ce qui permet d'effectuer la mesure par corrélation d'images, et garde son aspect homogène à l'échelle millimétrique, ce qui permet d'effectuer la mesure par lumière structurée. La mesure par corrélation d'images peut être optimisée en illuminant avec un angle incident rasant et, éventuellement avec une lumière monochromatique, ce qui peut faire ressortir l'aspect moucheté de la surface.

En effet, la lumière structurée peut être de type sinusoïdal présentant, sur la surface de l'échantillon, un pas de l'ordre du millimètre, alors que l'échelle des inhomogénéités prises en compte dans la corrélation d'images peut être micrométrique. Ainsi, le dépôt de grains micrométriques ne perturbe pas la mesure par lumière structurée. Dans le cas où les grains déposés sont de plus grande taille, il peut être nécessaire, pour le traitement d'image associé à la mesure par lumière structurée, de tenir compte, dans un calcul, des inhomogénéités à l'échelle micrométrique, ce qui est faisable jusqu'à une certaine taille des grains. Le dépôt peut être effectué par une projection réversible permettant de rétablir l'état initial de la surface 1 après la mesure. Dans le cas où la surface 1 est polie et très réfléchissante ou dans le cas ou la surface présente une très forte inhomogénéité, le dépôt de grains permet notamment d'effectuer des mesures indépendamment des propriétés de surface.

Pour l'acquisition des images correspondant à la mesure par lumière structurée, c'est une identification d'évènements sur l'échantillon avec des variations à une échelle millimétrique, par exemple pour un champ observé ayant des dimensions latérales comprises entre 2cm et 15 cm, tandis que pour la mesure par corrélation d'images, une résolution micrométrique est nécessaire. Il est ainsi possible d'adapter la résolution de la caméra à l'acquisition des images respectives, ce qui permet notamment de réduire la durée d'intégration pour la mesure correspondant à l'illumination structurée. Dans un autre mode de réalisation, la résolution de la caméra est toujours micrométrique. Dans ce dernier cas, les signaux micrométriques peuvent être filtrés par l'intermédiaire du traitement d'image, pour le traitement correspondant à l'illumination structurée.

Dans le cas où la surface 1 de l'échantillon 2 est plus grande que le champ de vision de la caméra 3, pour une résolution souhaitée prédéterminée, il est possible d'effectuer plusieurs mesures respectivement de plusieurs parties de la surface 1 de l'échantillon 2 en utilisant des moyens optiques appropriés, par exemple des objectifs, des zooms ou des microscopes. Ainsi, l'acquisition d'images peut être d'effectuée champ par champ. Pour cela, plutôt que de déplacer les moyens de mesure par rapport à l'échantillon 2, il est préférable de déplacer l'échantillon 2, et éventuellement l'enceinte 6, au moyen d'un dispositif comportant deux plaques de granit poli en mouvement relatif, par exemple déplaçable par l'intermédiaire d'un coussin d'air établi entre les deux plaques.

L'invention n'est pas limitée aux modes de réalisation représentés. En particulier, l'enceinte 6 peut est transparente seulement localement et à la lumière visible L uniquement.

Dans un autre mode de réalisation particulier de l'invention, le dispositif comporte des troisièmes moyens de mesure pour la détection d'un rayonnement infrarouge IR2 émis par l'échantillon, par exemple une caméra infrarouge ou un détecteur 20 d'infrarouge (figure 1) sensible au rayonnement ayant une longueur d'onde comprise entre 8 et 16 micromètres. Les troisièmes moyens de mesure sont, de préférence, disposés à l'extérieur de l'enceinte 6. Dans ce cas, l'enceinte 6 comporte, par exemple, une fenêtre 21 transparente au rayonnement infrarouge émis par l'échantillon 2, c'est-à-dire à des longueurs d'onde comprises, par exemple, entre 8 et 16 micromètres, par exemple pour un détecteur (20) à micro-bolomètres.

Le rayonnement infrarouge émis par l'échantillon permet de déterminer la température de l'échantillon et, de plus, de caractériser des déformations thermo-élastiques, des endommagements, des créations de défauts irréversibles et des chocs à l'intérieur et à la surface de l'échantillon, par l'intermédiaire de la chaleur dissipée correspondante. Dans ce cas, les moyens de chauffage comportent, de préférence, des moyens pour faire varier la température périodiquement.

Lorsque les émetteurs d'infrarouge sont disposés à l'extérieur de l'enceinte 6, l'enceinte 6 peut être transparente, au moins localement, aux longueurs d'onde de chauffage, qui sont typiquement de l'ordre de 2 micromètres. De plus, l'enceinte 6 peut être transparente aux longueurs d'onde de mesure de température par infrarouge, qui sont typiquement de comprises entre 8 à 16 micromètres. Ainsi, l'enceinte 6 comporte, par exemple, plusieurs fenêtres transparentes à des longueurs d'onde de l'ordre de 2 micromètres et/ou de 8 à 16 micromètres, chacune de ces fenêtres correspondant à un émetteur d'infrarouge de chauffage disposé en regard de la fenêtre ou à un moyen de mesure de température comme un pyromètre ou une caméra infrarouge.

Le procédé d'utilisation du dispositif comporte, de préférence, l'attribution à chaque élément de volume d'un code de référence représentatif de niveaux de gris détectés par la caméra 3 lors d'une première projection de la séquence d'images. Ensuite, lesdits codes de référence sont corrélés avec des données acquises par la caméra lors de projections ultérieures de la séquence d'images sur la surface 1 de l'échantillon 2, de manière à obtenir les coordonnées de ladite surface 1. Ces étapes peuvent, par exemple, être effectuées par l'intermédiaire du dispositif de contrôle 17 représenté à la figure 1.

L'attribution à chaque élément de volume d'un code de référence représentatif peut être associée à une étape d'étalonnage, lors de laquelle une surface de référence, par exemple une surface plane et unie, est disposée à différentes hauteurs dans le champ de vision. Chaque hauteur correspond à un niveau selon l'axe Z (figure 1). Pour chaque hauteur, une séquence d'images est projetée sur la surface de référence et le code de référence est déterminé à partir des niveaux de gris détectés par la caméra 3 lors de la projection de la séquence d'images sur la surface de référence. Chaque acquisition d'image de la caméra, pour un niveau selon Z donné, correspond à une pluralité d'éléments de volumes disposés dans le même plan. Une pluralité d'acquisitions d'image correspond ainsi à une succession de plans parallèles. A chaque point du volume du champ de vision est ainsi associé un élément de volume. L'attribution peut, en principe, également être effectuée de manière théorique, en tenant compte des caractéristiques de l'ensemble du dispositif.

Afin de varier le champ de mesure des moyens de mesure (3, 20), le dispositif peut comporter des actionneurs pour le déplacement relatif de l'échantillon par rapport aux moyens de mesure (3, 20), aux moyens de chauffage (9) et à des sources de lumière (4, 5). Ainsi, comme représenté par la flèche 24 à la figure 1, l'échantillon peut, par exemple, être déplacé selon l'axe Z. Dans un autre mode de réalisation, la caméra 3 et la source de lumière 4 sont déplacées selon leur propres axes longitudinaux comme représenté par les flèches 22a et 22b à la figure 1. Un déplacement relatif en rotation de la caméra 3 et la source de lumière 4 peut être envisagé comme représenté par la flèche 23, à la figure 1.

## Revendications

1. Dispositif de mesure de topographies et de déformations d'au moins une surface (1) d'un échantillon (2), comportant
- des premiers moyens de mesure, pour la mesure de topographies et de déplacements qui sont perpendiculaires à un plan prédéterminé,
- des seconds moyens de mesure, pour la mesure des déformations qui sont dans un plan défini par la surface, par corrélation d'images, les premiers et second moyens de mesure utilisant au moins une caméra (3) commune de détection de lumière,
- des moyens de chauffage et des moyens de mesure de la température de l'échantillon (2),
dispositif **caractérisé en ce que**
- les premiers moyens de mesure comportent des moyens de projection d'images composites, par illumination de la surface avec une séquence d'images, chaque image comportant un motif périodique (M), les motifs périodiques des différentes images de la séquence d'images présentant respectivement des pas de périodicité différents,
- le dispositif comporte une enceinte (6) transparente au moins localement à la lumière visible (L), dans laquelle l'échantillon (2) est disposable, les moyens de chauffage comportant au moins un émetteur (9) infrarouge créant une lumière infrarouge non-détectée par la caméra (3).

2. Dispositif selon la revendication 1, **caractérisé en ce qu'**il comporte des moyens pour
- l'attribution à chaque élément de volume d'un code de référence représentatif de niveaux de gris détectés par la caméra (3) lors d'une première projection de la séquence d'images,
- et la corrélation desdits codes de référence avec des données acquises par la caméra lors de projections ultérieures de la séquence d'images sur la surface (1) de l'échantillon (2).

3. Dispositif selon l'une des revendications 1 et 2, **caractérisé en ce qu'**il comporte des troisièmes moyens de mesure (20), pour la détection d'un rayonnement infrarouge (IR2) émis par l'échantillon (2).

4. Dispositif selon l'une quelconque des revendications 1 à 3, **caractérisé en ce qu'**il comporte des moyens pour le déplacement relatif de l'échantillon par rapport aux moyens de mesure (3, 20), aux moyens de chauffage (9) et à des sources de lumière (4, 5), de manière à rendre variable le champ de mesure des moyens de mesure (3, 20).

5. Dispositif selon la revendication 3, **caractérisé en ce que** les troisièmes moyens de mesure sont disposés à l'extérieur de l'enceinte (6), l'enceinte (6) comportant une fenêtre (21) transparente au rayonnement infrarouge (IR2) émis par l'échantillon (2).

6. Dispositif selon l'une quelconque des revendications 1 à 5, **caractérisé en ce qu'**il comporte des moyens pour faire varier périodiquement une sollicitation de l'échantillon.

7. Dispositif selon l'une quelconque des revendications 1 à 6, **caractérisé en ce qu'**il comporte un support (14) d'échantillon découplé mécaniquement de l'enceinte (6).

8. Dispositif selon la revendication 7, **caractérisé en ce que** le support (14) d'échantillon est transparent au rayonnement infrarouge (IR).

9. Dispositif selon l'une quelconque des revendications 1 à 8, **caractérisé en ce que** les moyens de chauffage comportent des moyens de contrôle (17) de la température par asservissement à la mesure de la température de l'échantillon (2).

10. Dispositif selon l'une quelconque des revendications 1 à 9, **caractérisé en ce que** plusieurs émetteurs (9) infrarouges de chauffage sont orientables et situés à l'extérieur de l'enceinte (6).

11. Dispositif selon l'une quelconque des revendications 1 à 10, **caractérisé en ce que** la caméra (3) comporte un filtre (15) de lumières rouge et infrarouge.

12. Dispositif selon l'une quelconque des revendications 1 à 11, **caractérisé en ce qu'**il comporte des moyens de refroidissement.

13. Dispositif selon la revendication 12, **caractérisé en ce que** l'enceinte (6) est transparente aux lumières visible (7, 8, L) et infrarouge (IR), les moyens de refroidissement comportant des moyens de refroidissement de l'échantillon (2) par un fluide de refroidissement.

14. Dispositif selon la revendication 13, **caractérisé en ce que** les moyens de refroidissement comportent au moins une entrée (10) de fluide de refroidissement, disposée dans l'enceinte (6), et au moins une sortie (13) permettant d'évacuer le fluide de refroidissement de l'enceinte (6).

15. Procédé d'utilisation d'un dispositif selon l'une quelconque des revendications 1 à 14, **caractérisé en ce qu'**il comporte
- l'attribution à chaque élément de volume d'un code de référence représentatif de niveaux de gris détectés par la caméra (3) lors d'une première projection de la séquence d'images,
- et la corrélation desdits codes de référence avec des données acquises par la caméra lors de projections ultérieures de la séquence d'images sur la surface (1) de l'échantillon (2), de manière à obtenir les coordonnées de ladite surface (1).

16. Procédé selon la revendication 15, **caractérisé en ce qu'**il comporte une alternance de premières et secondes phases d'activation respectivement des premiers et seconds moyens de mesure.

17. Procédé selon l'une des revendications 15 et 16, **caractérisé en ce qu'**il comporte le dépôt de grains (19) micrométriques sur la surface (1) de l'échantillon (2), de manière à ce que les grains (19) soient liés à la surface (1).

18. Procédé selon l'une quelconque des revendications 15 à 17, **caractérisé en ce que**, l'échantillon étant un composant électronique, le procédé comporte la mise en fonctionnement dudit composant électronique, la mesure par l'intermédiaire des premiers, seconds et/ou troisièmes moyens de mesure étant effectuée lors du fonctionnement du composant électronique.

## Claims

1. Device for measuring topographies and strains of at least one surface (1) of a sample (2), comprising
- first measuring means for measuring topographies and movements that are perpendicular to a predetermined plane,
- second measuring means for measuring strains that are in a plane defined by the surface, by image correlation, the first and second measuring means using at least one common light detection camera (3),
- heating means and means for measuring the temperature of the sample (2),
device **characterized in that**
- the first measuring means comprise means for projecting composite images by illuminating the surface with a sequence of images, each image comprising a periodic pattern (M), the periodic patterns of the different images of the sequence of images respectively presenting pitches of different periodicities,
- the device comprises an enclosure (6) transparent at least locally to visible light (L), wherein the sample (2) is able to be arranged, the heating means comprising at least one infrared emitter (9) creating an infrared light not detected by the camera (3).

2. Device according to claim 1, **characterized in that** it comprises means for
- assignment to each volume element of a reference code representative of grey levels detected by the camera (3) when a first projection of the sequence of images is performed,
- and correlation of said reference codes with data acquired by the camera when subsequent projections of the sequence of images are performed on the surface (1) of the sample (2).

3. Device according to one of the claims 1 and 2, **characterized in that** it comprises third measuring means (20) for detecting an infrared radiation (IR2) emitted by the sample (2).

4. Device according to any one of the claims 1 to 3, **characterized in that** it comprises means for relative movement of the sample with respect to the measuring means (3, 20), to the heating means (9) and to light sources (4, 5) so as to make the field of measurement of the measuring means (3, 20) variable.

5. Device according to claim 3, **characterized in that** the third measuring means are arranged outside the enclosure (6), the enclosure (6) comprising a window (21) transparent to the infrared radiation (IR2) emitted by the sample (2).

6. Device according to any one of the claims 1 to 5, **characterized in that** it comprises means for making a stressing of the sample vary periodically.

7. Device according to any one of the claims 1 to 6, **characterized in that** it comprises a sample support (14) mechanically decoupled from the enclosure (6).

8. Device according to claim 7, **characterized in that** the sample support (14) is transparent to infrared radiation (IR).

9. Device according to any one of the claims 1 to 8, **characterized in that** the heating means comprise temperature control means (17) by servo-control by measurement of the temperature of the sample (2).

10. Device according to any one of the claims 1 to 9, **characterized in that** several infrared heating emitters (9) are able to be oriented in direction and are located outside the enclosure (6).

11. Device according to any one of the claims 1 to 10, **characterized in that** the camera (3) comprises a red and infrared light filter (15).

12. Device according to any one of the claims 1 to 11, **characterized in that** it comprises cooling means.

13. Device according to claim 12, **characterized in that** the enclosure (6) is transparent to visible light (7, 8, L) and infrared light (IR), the cooling means comprising means for cooling the sample (2) by a coolant.

14. Device according to claim 13, **characterized in that** the cooling means comprise at least one coolant inlet (10) arranged in the enclosure (6), and at least one outlet (13) enabling the coolant to be removed from the enclosure (6).

15. Method for using a device according to any one of the claims 1 to 14, **characterized in that** it comprises
- assignment to each volume element of a reference code representative of grey levels detected by the camera (3) when a first projection of the sequence of images is performed,
- and correlation of said reference codes with data acquired by the camera when subsequent projections of the sequence of images are performed on the surface (1) of the sample (2) so as to obtain the coordinates of said surface (1).

16. Method according to claim 15, **characterized in that** it comprises an alternation of first and second activation phases respectively of the first and second measuring means.

17. Method according to one of the claims 15 and 16, **characterized in that** it comprises deposition of micrometric grains (19) on the surface (1) of the sample (2) so that the grains (19) are bonded to the surface.

18. Method according to any one of the claims 15 to 17, **characterized in that**, the sample being an electronic component, the method comprises making said electronic component operate, measurement by means of the first, second and/or third measuring means being performed when the electronic component is operating.

## Patentansprüche

1. Vorrichtung zur Messung von Topographien und Deformationen an mindestens einer Oberfläche (1) eines Musterstücks (2), bestehend aus:
- ersten Messmitteln zur Messung von Topographien und Verschiebungen, die im rechten Winkel zu einer vorbestimmten Ebene bestehen,
- zweiten Messmitteln zur Messung von Deformationen, die sich in einer durch die Oberfläche bestimmten Ebene befinden, durch Korrelation von Bildern, wobei bei den ersten und den zweiten Messmitteln mindestens eine gemeinsame Kamera (3) zur Lichterfassung verwendet wird,
- Heizmitteln und Mitteln zur Messung der Temperatur des Musterstücks (2),
**dadurch gekennzeichnet,**
**dass**
- die ersten Messmittel Mittel zur Projektion von zusammengesetzten Bildern durch Anstrahlen der Oberfläche mit einer Bilderfolge umfassen, wobei jedes Bild ein periodisches Muster (M) enthält, wobei die periodischen Muster der verschiedenen Bilder der Bilderfolge jeweils verschiedene Periodizitätsschritte aufweisen,
- die Vorrichtung einen zumindest stellenweise für sichtbares Licht (L) durchlässigen Raum (6) aufweist, in dem das Musterstück (2) angeordnet werden kann, wobei die Heizmittel mindestens einen Infrarotstrahler (9) umfassen, der ein von der Kamera (3) nicht erfasstes Infrarotlicht aussendet.

2. Vorrichtung nach Anspruch 1,
**dadurch gekennzeichnet,**
**dass** sie Mittel enthält zur
- Zuordnung eines Referenzcodes, der für die Graustufen steht, die von der Kamera (3) bei einer ersten Projektion der Bilderfolge erfasst werden, zu jedem Volumenelement,
- und Korrelation der genannten Referenzcodes mit Daten, die durch die Kamera bei weiteren Projektionen der Bilderfolge auf die Oberfläche (1) des Musterstücks (2) erfasst werden.

3. Vorrichtung nach einem der Ansprüche 1 und 2,
**dadurch gekennzeichnet,**
**dass** sie dritte Messmittel (20) zur Erfassung einer von dem Musterstück (2) abgegebenen Infrarotstrahlung (IR2) aufweist.

4. Vorrichtung nach einem der Ansprüche 1 bis 3,
**dadurch gekennzeichnet,**
- **dass** sie Mittel zum Verschieben des Musterstücks gegenüber den Messmitteln (3, 20), den Heizmitteln (9) und den Lichtquellen (4, 5) dergestalt aufweist, dass das Messfeld der Messmittel (3, 20) variabel wird.

5. Vorrichtung nach Anspruch 3,
**dadurch gekennzeichnet,**
**dass** die dritten Messmittel außerhalb des Raums (6) angeordnet sind, wobei der Raum (6) ein Fenster (21) aufweist, das für die von dem Musterstück (2) abgegebene Infrarotstrahlung (IR2) durchlässig ist.

6. Vorrichtung nach einem der Ansprüche 1 bis 5,
**dadurch gekennzeichnet,**
**dass** sie Mittel aufweist, um eine Belastung des Musterstücks periodisch variieren zu lassen.

7. Vorrichtung nach einem der Ansprüche 1 bis 6,
**dadurch gekennzeichnet,**
**dass** sie eine Musterstück-Auflage (14) enthält, die von dem Raum (6) mechanisch entkoppelt ist.

8. Vorrichtung nach Anspruch 7,
**dadurch gekennzeichnet,**
**dass** die Musterstück-Auflage (14) für Infrarotstrahlung (IR) durchlässig ist.

9. Vorrichtung nach einem der Ansprüche 1 bis 8,
**dadurch gekennzeichnet,**
**dass** die Heizmittel Temperatur-Steuermittel (17) mittels Kopplung an die Messung der Temperatur des Musterstücks (2) enthalten.

10. Vorrichtung nach einem der Ansprüche 1 bis 9,
**dadurch gekennzeichnet,**
**dass** mehrere Heiz-Infrarotstrahler (9) drehbar und außerhalb des Raums (6) angeordnet sind.

11. Vorrichtung nach einem der Ansprüche 1 bis 10,
**dadurch gekennzeichnet,**
**dass** die Kamera (3) einen Filter (15) für Rotlicht und Infrarotlicht aufweist.

12. Vorrichtung nach einem der Ansprüche 1 bis 11,
**dadurch gekennzeichnet,**
**dass** sie Kühlungsmittel aufweist.

13. Vorrichtung nach Anspruch 12,
**dadurch gekennzeichnet,**
**dass** der Raum (6) für sichtbares Licht (7, 8, L) und Infrarotlicht (IR) durchlässig ist, wobei die Kühlungsmittel Mittel zur Kühlung des Musterstücks (2) durch ein Kühlfluid enthalten.

14. Vorrichtung nach Anspruch 13,
**dadurch gekennzeichnet,**
**dass** die Kühlungsmittel mindestens einen Einlass (10) für Kühlfluid, der in dem Raum (6) angeordnet ist, und mindestens einen Auslass (13) enthalten, durch den das Kühlfluid aus dem Raum (6) abgeführt werden kann.

15. Verfahren zur Anwendung einer Vorrichtung nach einem der Ansprüche 1 bis 14,
**dadurch gekennzeichnet,**
**dass** es umfasst:
- die Zuordnung eines Referenzcodes, der für die Graustufen steht, die von der Kamera (3) bei einer ersten Projektion der Bilderfolge erfasst werden, zu jedem Volumenelement,
- und die Korrelation der genannten Referenzcodes mit Daten, die durch die Kamera bei weiteren Projektionen der Bilderfolge auf die Oberfläche (1) des Musterstücks (2) erfasst werden, dergestalt dass die Koordinaten dieser Oberfläche (1) erfasst werden.

16. Verfahren nach Anspruch 15,
**dadurch gekennzeichnet,**
**dass** es sich abwechselnde erste und zweite Aktivierungsphasen der ersten bzw. zweiten Messmittel umfasst.

17. Verfahren nach einem der Ansprüche 15 und 16,
**dadurch gekennzeichnet,**
**dass** es das Auftragen von mikrometrischen Körnern (19) auf die Oberfläche (1) des Musterstücks (2) umfasst, und zwar dergestalt, dass die Körner (19) mit der Oberfläche (1) verbunden werden.

18. Verfahren nach einem der Ansprüche 15 bis 17,
**dadurch gekennzeichnet,**
**dass** es, indem das Musterstück ein elektronisches Bauteil ist, das In-Betrieb-Setzen dieses elektronischen Bauteils umfasst, wobei das Messen mittels der ersten, zweiten und/oder dritten Messmittel während des Betriebs des elektronischen Bauteils erfolgt.
